# EUROPÄISCHE PATENTSCHRIFT

(11) **EP 2 039 847 B1**
(45) Veröffentlichungstag und Bekanntmachung des Hinweises auf die Patenterteilung: **16.01.2013**
(21) Anmeldenummer: 08105224.3
(22) Anmeldetag: 04.09.2008
(51) Int. Cl.: E04F 13/08, E04D 3/36

(54) **Befestigungselement für die befestigung von dämmstoffplatten an einer unterkonstruktion**
Mounting element for attaching insulation boards to a substructure
Elément de fixation pour la fixation de plaques de matériau isolant sur un sous-sol

(30) Priorität: 20.09.2007 DE 102007000758
(43) Veröffentlichungstag der Anmeldung: 25.03.2009
(73) Patentinhaber: HILTI Aktiengesellschaft, 9494 Schaan (LI)
(72) Erfinder: Spröwitz, Michael, 6800, Feldkirch-Tisis (AT); Zimmerer, Claudia, 88131, Lindau (DE)
(74) Vertreter: Wildi, Roland

(56) Entgegenhaltungen:
- EP-A- 0 811 773
- EP-A- 1 046 764
- EP-A- 1 783 300

## Beschreibung

Die Erfindung betrifft ein Befestigungselement für die Befestigung von Dämmstoffplatten an einer Unterkonstruktion der im Oberbegriff des Patentanspruchs 1 genannten Art.

Zur Befestigung von Dämmstoffplatten, beispielsweise eines Wärmedämm-Verbundsystems, an einer Unterkonstruktion, wie z. B. an einer Wand aus Beton, Mauerwerk, Holz usw., werden als Befestigungselemente beispielsweise Kunststoffdübel mit einem Verankerungsabschnitt und einem Dübelteller verwendet, der aussenseitig an der Dämmstoffplatte anliegt oder in dem Dämmstoff versenkt wird.

Die EP 1 046 764 A1 zeigt eine zweiteilige Befestigungsvorrichtung zur distanzierten Befestigung von Dämmstoffplatten an einer Unterkonstruktion mit einem Befestigungselement und einer separaten Befestigungsschraube, mittels der das Befestigungselement in der Untergrundkonstruktion festgelegt wird. Das Befestigungselement selbst weist eine Drehmitnahme und einen Schaft auf, der an seinem ersten Ende eine Anlagefläche zur Anlage an der Unterkonstruktion und der mit zwei Wendelgängen versehen ist. Die Wendelgänge sind jeweils an den beiden Endbereichen des Schafts und axial beabstandet zueinander angeordnet. Die Schneidkante eines jeden Wendelgangs verläuft bogenförmig und weist keinen bestimmten Winkel zum betreffenden Radius auf.

Die EP 0 811 773 A2 zeigt ebenfalls eine zweiteilige Befestigungsvorrichtung zur distanzierten Befestigung von Dämmstoffplatten an einer Unterkonstruktion mit einem Befestigungselement und einer separaten Befestigungsschraube, mittels der das Befestigungselement in der Untergrundkonstruktion festgelegt wird. Das Befestigungselement weist eine Drehmitnahme und einen Schaft auf, der an seinem ersten Ende eine Anlagefläche zur Anlage an der Unterkonstruktion und an seinem zweiten Ende eine eingängige Wendel aufweist. In einer Ausführungsform weist der Wendelgang eine radial vom Schaft abgewandte Schneidkante auf.

Aus der EP 1 783 300 A2 ist ein gattungsgemässes Befestigungselement bekannt, das einen Schaft mit einer von einer Spreizschraube aufweitbare Spreizzone als Verankerungsabschnitt an einem ersten Ende sowie an einem zweiten Ende eine Drehmitnahme und am zweiten Endbereich dem ersten Ende zugewandte Wendelgänge aufweist. Die Wendelgänge weisen jeweils ausgehend von deren Aussenkontur eine in einem Winkel zum Radius des Wendelgangs verlaufende Schneidkante auf.

Das bekannte Befestigungselement wird mit einem in der Drehmitnahme eingreifenden Setzwerkzeug drehend in ein zuvor durch die Dämmstoffplatte in den Untergrund erstelltes Bohrloch gesetzt, wobei sich die Wendelgänge in den Dämmstoff einschneiden und die Dämmstoffplatte an der Unterkonstruktion sicher halten. Bei diesem Setzvorgang wird der Dämmstoff nur minimal beschädigt. Zudem hat sich der Montagevorgang mit dem bekannten Befestigungselement gegenüber anderen Befestigungssystemen massgeblich vereinfacht, wobei eine sichere und thermisch vorteilhafte Befestigung der Dämmstoffplatte gewährleistet ist.

Aufgabe der Erfindung ist es, ein gattungsgemässes Befestigungselement zu schaffen, bei dem die vorteilhaften Eigenschaften des bekannten Befestigungselementes noch weiter verbessert sind.

Die Aufgabe ist durch die Merkmale des unabhängigen Anspruchs 1 gelöst. Vorteilhafte Weiterbildungen sind in den Unteransprüchen dargelegt.

Gemäss der Erfindung ist die Schneidkante radial vom Schaft abgewandt und schliesst mit dem betreffenden Radius des entsprechenden Wendelgangs einen Winkel von 15° bis 75°ein.

Mit der derart ausgerichteten Schneidkante ist das Einschneidverhalten beim drehangetriebenen Setzen des Befestigungselementes gegenüber der bekannten Lösung weiter verbessert. Beim Setzen des Befestigungselementes treten nur unwesentliche Ausbrüche im Bereich der Anschnitte an der Dämmstoffplatte auf, so dass die thermischen Eigenschaften der Dämmstoffplatte weiterhin erhalten bleiben. Das Befestigungselement ist zur Befestigung von Dämmstoffplatten mit unterschiedlichen Plattenstärken sowie aus diversen Materialien anwendbar.

Der Verankerungsabschnitt ist beispielsweise derart ausgebildet, dass das Befestigungselement über eine Klemmverbindung in der Unterkonstruktion verankert ist. Alternativ ist der Verankerungsabschnitt als Spreizzone ausgebildet, die mit einem Spreizteil aufweitbar ist. In einer weiteren Alternative ist der Verankerungsabschnitt als Schraube mit einem Gewinde ausgebildet, das beim drehenden Setzen des Befestigungselementes ein Gegengewinde in die Unterkonstruktion schneidet beziehungsweise furcht.

Die Wendelgänge sind vorteilhaft gleich ausgebildet und weisen weiter vorteilhaft jeweils die gleiche Steigung auf, welche vorteilhaft 30 mm bis 100 mm beträgt. Die Wendelgänge verlaufen vorteilhaft entlang 90° bis 360°, insbesondere 180° bis 300° des Schaftaussendurchmessers.

In der Aufsicht bilden die Wendelgänge vorteilhaft einen nahezu geschlossenen Ring aus, wodurch eine auf das Befestigungselement wirkende Zug- oder Drucklast in Richtung der Längsachse des Schafts über die nahezu volle Kreisfläche des von den Wendelgängen gebildeten Halteteils übertragen wird. Somit steht eine ausreichend grosse Fläche zur Verfügung, um die Flächenpressung auf den Dämmstoff klein zu halten und dadurch Beschädigungen an diesem weitgehend zu vermeiden.

Vorteilhaft sind zwei Wendelgänge an dem Befestigungselement vorgesehen, deren Schneidkanten um 180° versetzt zueinander angeordnet sind, was ein gleichmässiges Anschneiden der Dämmstoffplatte gewährleistet. Bei mehr als zwei Wendelgängen sind die Schneidkanten vorteilhaft ebenfalls gleichmässig verteilt zueinander angeordnet.

Der zumindest der Schneidkante zugewandte Endbereich eines Wendelgangs ist sichelförmig ausgebildet und weist eine dem Schaft zugewandte Kante auf, die ausgehend vom zweiten Endbereich des Schafts bis zur Schneidkante verläuft und deren Abstand zum Schaft zur Schneidkante hin kontinuierlich zunimmt. Die dem Schaft zugewandte Kante hat in der Aufsicht eine im Wesentlichen konkave Ausgestaltung. Die dem Schaft zugewandte Kante schneidet sich mit der Schneidkante unter einem spitzen Winkel, wodurch eine Schneidspitze geschaffen wird, die ein leichtes Einschneiden des Befestigungselementes in den Dämmstoff gewährleistet.

Die von den Schneidkanten und der dem Schaft zugewandten Kanten gebildeten Schneidspitzen sind bezogen auf die Längsachse des Schafts vorteilhaft auf der gleichen axialen Höhe angeordnet. Zu Beginn des drehenden Setzvorgangs liegen die Schneidspitzen an der Dämmstoffplatte an und dringen in diese mit einem sauberen Anschnitt ein. Da die Schneidspitzen beziehungsweise die Schneidkanten gleichzeitig und vorteilhaft gleichmässig um die Längsachse verteilt in die Unterkonstruktion eindringen, ist ein Verkippen des Befestigungselementes beim Setzvorgang weitgehend verhindert.

Bevorzugt weist jeder Wendelgang eine Dicke auf, wobei der Wendelgang sich bereichsweise in Richtung der Schneidkante verjüngt. Durch diese Verjüngung des Wendelgangs wird eine scharfe Schneidkante geschaffen, welche den Einschneidvorgang des Wendelgangs beim Setzen des Befestigungselementes in den Dämmstoff zusätzlich erleichtert.

Vorzugsweise weist jeder Wendelgang eine Dicke auf, wobei der Wendelgang sich bereichsweise in Richtung der dem Schaft zugewandten Kante verjüngt. Durch diese Verjüngung des Wendelgangs wird eine zusätzliche, vorteilhaft scharfe Schneidkante geschaffen, welche den Einschneidvorgang des Wendelgangs beim Setzen des Befestigungselementes in den Dämmstoff zusätzlich erleichtert. Die Verjüngung verläuft vorteilhaft in einem Winkel von 5° bis 60° zu einer der Oberflächen des Wendelgangs, die im gesetzten Zustand des Befestigungselementes der Unterkonstruktion oder der Aussenseite der Dämmstoffplatte zugewandt sind, und ist weiter vorteilhaft als eine Fase ausgebildet.

Bevorzugt ist die Schneidkante in einem Winkel von 10° bis 80° zu einer senkrecht zur Längsachse des Schafts verlaufenden Ebene geneigt, was das Einschneidverhalten des Befestigungselementes zusätzlich vorteilhaft verbessert. Durch die genannte Neigung wird ein Ausbrechen von angeschnittenem Dämmstoffmaterial an der Oberfläche der Dämmstoffplatte verhindert.

Die Erfindung wird nachstehend anhand eines Ausführungsbeispiels näher erläutert. Es zeigen:
- Fig. 1: Ein erfindungsgemässes Befestigungselement in Seitenansicht;
- Fig. 2: einen Schnitt entlang Linie II-II gem. Fig. 3; und
- Fig. 3: das Befestigungselement im gesetzten Zustand in einer Seitenansicht.

Grundsätzlich sind in den Figuren gleiche Teile mit den gleichen Bezugszeichen versehen.

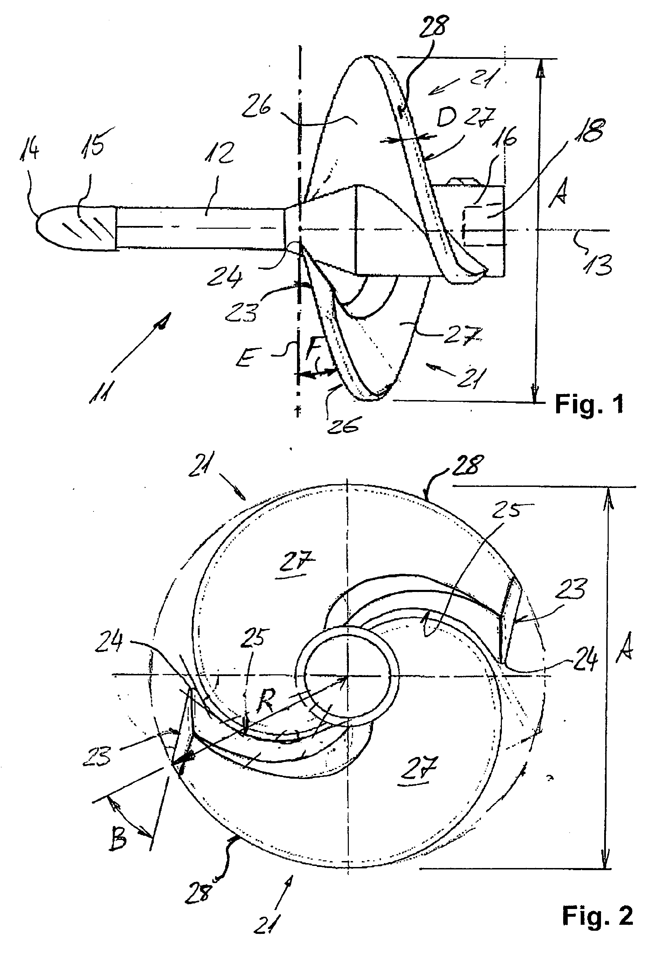

Das in den Figuren 1 bis 3 dargestellte Befestigungselement 11 für die Befestigung von Dämmstoffplatten 2 an einer Unterkonstruktion 1, z. B. an einer Betonwand, weist einen sich entlang einer Längsachse 13 erstreckenden Schaft 12 auf, der an einem ersten Ende 14 eine von einer Spreizschraube aufweitbare Spreizzone als Verankerungsabschnitt 15 zur Verankerung des Befestigungselementes 11 in der Unterkonstruktion 1 sowie an einem zweiten, dem ersten Ende 14 gegenüberliegenden Endbereich 16 ein Drehmitnahme 18 und zwei Wendelgänge 21 mit einer Steigung und mit einem Aussendurchmesser A aufweist.

Jeder Wendelgang 21 weist ausgehend von seiner Aussenkontur 28 eine zum Radius R verlaufende Schneidkante 23 auf, die radial vom Schaft 12 abgewandt ist und mit dem betreffenden Radius R des entsprechenden Wendelgangs 21 einen Winkel B von 55° einschliesst.

Weiter ist der der Schneidkante 23 zugewandte Endbereich eines Wendelgangs 21 sichelförmig ausgebildet und weist eine dem Schaft 12 zugewandte Kante 25 auf, die ausgehend vom zweiten Endbereich 16 des Schafts 12 bis zur Schneidkante 23 verläuft und deren Abstand zum Schaft 12 zur Schneidkante 23 hin kontinuierlich zunimmt. Die dem Schaft 12 zugewandte Kante 25 weist in der Aufsicht einen konkaven Verlauf auf. Die Schneidkante 23 und die dem Schaft 12 zugewandte Kante 25 schneiden sich unter einem spitzen Winkel und bilden eine Schneidspitze 24 aus. Die Schneidspitzen 24 der Wendelgänge 21 liegen bezogen auf die Längsachse 13 des Schafts 12 beide auf der gleichen axialen Höhe.

Jeder Wendelgang 21 weist eine Dicke D auf, die von einer Unterseite 26 und einer Oberseite 27 begrenzt ist. Zudem verjüngt sich jeder Wendelgang 21 bereichsweise einerseits in Richtung der Schneidkante 23 und andererseits in Richtung der dem Schaft 12 zugewandten Kante 25. Die Schneidkante 23 ist in einem Winkel F von 25° zu einer senkrecht zur Längsachse 13 des Schafts 12 verlaufenden Ebene E geneigt.

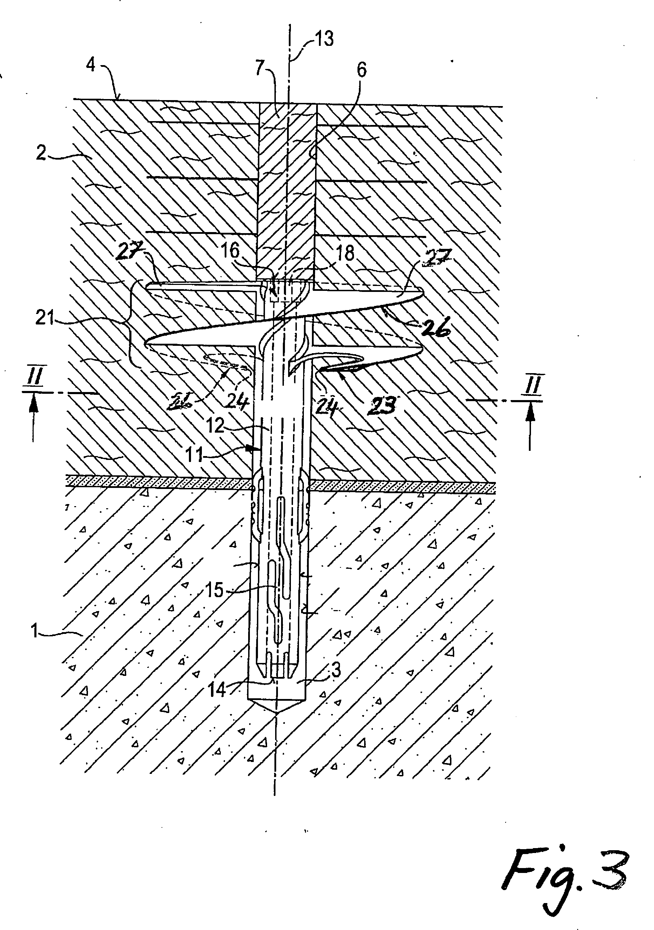

In der Figur 3 ist das Befestigungselement 11 nach Beendigung des Setzvorgangs dargestellt. Zuerst wird ein Bohrloch 3 durch die Dämmstoffplatte 2 in die Unterkonstruktion 1 erstellt. Dann wird das Befestigungselement 11 mit dem ersten Ende 14 voran in das Bohrloch 3 eingeführt und mit einem hier nicht dargestellten Setzwerkzeug, das in der Drehmitnahme 18 des Befestigungselementes 11 eingreift, drehangetrieben gesetzt, wobei die auf gleicher axialer Höhe liegenden Schneidspitzen 24 sowie die Schneidkanten 23 und die dem Schaft 12 zugewandten Kanten 25 für einen sauberen Anschnitt der Dämmstoffplatte 2 in den Dämmstoff einschneiden. Nachdem die gewünschte Setztiefe des Befestigungselementes 11 erreicht ist, wird der Verankerungsabschnitt 15 mit einer hier nicht dargestellten Spreizschraube aufgeweitet, so dass das Befestigungselement 11 sicher in der Unterkonstruktion 1 verankert und die Dämmstoffplatte 2 sicher an der Unterkonstruktion 1 gehalten beziehungsweise befestigt ist. Der Raum 6 zwischen dem Befestigungselement 11 und der Aussenseite 4 der Dämmstoffplatte 2 wird mit einem Stopfen 7 aus Isolationsmaterial verschlossen.

## Patentansprüche

1. Befestigungselement für die Befestigung von Dämmstoffplatten (2) an einer Unterkonstruktion (1) mit einer Drehmitnahme (18) und mit einem Schaft (12), der an einem ersten Ende (14) einen Verankerungsabschnitt (15) zur Verankerung des Befestigungselementes (11) in der Unterkonstruktion (1) und an einem zweiten, dem ersten Ende (14) gegenüberliegenden Endbereich (16) eine Wendel mit zumindest zwei Wendelgängen (21) aufweist, wobei
jeder Wendelgang (21) ausgehend von seiner Aussenkontur (28) eine in einem Winkel (B) zum Radius (R) des betreffenden Wendelgangs (21) verlaufende Schneidkante (23) aufweist,
wobei zumindest der der Schneidkante (23) zugewandte Endbereich eines Wendelgangs (21) sichelförmig ausgebildet ist und eine dem Schaft (12) zugewandte Kante (25) aufweist, die ausgehend vom zweiten Endbereich (16) des Schafts (12) bis zur Schneidkante (23) verläuft und deren Abstand zum Schaft (12) zur Schneidkante (23) hin kontinuierlich zunimmt,
**dadurch gekennzeichnet, dass**
die Schneidkante (23) radial vom Schaft (12) abgewandt ist und mit dem betreffenden Radius (R) des entsprechenden Wendelgangs (21) einen Winkel (B) von 15° bis 75° einschliesst,

2. Befestigungselement nach Anspruch 1 **dadurch gekennzeichnet, dass** jeder Wendelgang (21) eine Dicke (D) aufweist, wobei der Wendelgang (21) sich bereichsweise in Richtung der Schneidkante (23) verjüngt.

3. Befestigungselement nach Anspruch 1 oder 2, **dadurch gekennzeichnet, dass** jeder Wendelgang (21) eine Dicke (D) aufweist, wobei der Wendelgang (21) sich bereichsweise in Richtung der dem Schaft (12) zugewandten Kante (25) verjüngt.

4. Befestigungselement nach einem der Ansprüche 1 bis 3, **dadurch gekennzeichnet, dass** die Schneidkante (23) in einem Winkel (F) von 10° bis 80° zu einer senkrecht zur Längsachse (13) des Schafts (12) verlaufenden Ebene (E) geneigt ist.

## Claims

1. A fastener for fastening insulation panels (2) to a substrate (1), said fastener comprising rotational entrainment means (18) and a shank (12), which at a first end (14) has an anchoring portion (15) for anchoring the fastener (11) into the substrate (1), and in the region of a second end (16) opposite the first end (14) has a helix having at least two helical segments (21), in which case each helical segment (21) has a cutting edge (23) proceeding from its outer contour (28) and extending at an angle (B) relative to the radius (R) of the respective helical segment (21), and at least the end portion of a helical segment (21) facing towards the cutting edge (23) is sickle-shaped and has an edge (25) which faces the shank (12) and extends from the second end portion (16) of the shank (12) to the cutting edge (23) at a steadily increasing distance from the shank (12) as it nears the cutting edge (23),
**characterized in that**
the cutting edge (23) is directed radially away from the shank (12) and forms an angle (B) of 15° to 75° with the respective radius (R) of the corresponding helical segment (21).

2. A fastener according to Claim 1, **characterized in that** each helical segment (21) has a thickness (D), the helical segment (21) tapering off in certain areas in the direction of the cutting edge (23).

3. A fastener according to Claim 1 or 2, **characterized in that** each helical segment (21) has a thickness (D), the helical segment (21) tapering off in certain areas in the direction of the edge (25) facing the shank (12).

4. A fastener according to one of Claims 1 to 3, **characterized in that** the cutting edge (23) is inclined at an angle (F) of 10° to 80° relative to a plane (E) extending perpendicular to the longitudinal axis (13) of the shank (12).

## Revendications

1. Elément de fixation pour la fixation de plaques de matériau isolant (2) sur une sous-construction (1) avec un entraînement rotatif (18) et avec une tige (12) qui présente sur une première extrémité (14) une section d'ancrage (15) pour l'ancrage de l'élément de fixation (11) dans la sous-construction (1) et sur une seconde zone d'extrémité (16) opposée à la première extrémité (14), une hélice avec au moins deux pas hélicoïdaux (21),
chaque pas hélicoïdal (21) présentant à partir de son contour extérieur (28) une arête de coupe (23) s'étendant dans un angle (B) par rapport au rayon (R) du pas hélicoïdal concerné (21),
au moins la zone d'extrémité tournée vers l'arête de coupe (23) d'un pas hélicoïdal (21) étant réalisée en forme de croissant et présentant une arête (25) tournée vers la tige (12) qui s'étend de la seconde zone d'extrémité (16) de la tige (12) à l'arête de coupe (23) et dont la distance entre la tige (12) et l'arête de coupe (23) augmente en continu,
**caractérisé en ce que**
l'arête de coupe (23) est éloignée radialement de la tige (12) et forme avec le rayon concerné (R) du pas hélicoïdal (21) correspondant un angle (B) compris entre 15 et 75°.

2. Elément de fixation selon la revendication 1, **caractérisé en ce que** chaque pas hélicoïdal (21) présente une épaisseur (D), le pas hélicoïdal (21) se rétrécissant par endroits en direction de l'arête de coupe (23).

3. Elément de fixation selon la revendication 1 ou 2, **caractérisé en ce que** chaque pas hélicoïdal (21) présente une épaisseur (D), le pas hélicoïdal (21) se rétrécissant par endroits en direction de l'arête (25) tournée vers la tige (12).

4. Elément de fixation selon l'une quelconque des revendications 1 à 3, **caractérisé en ce que** l'arête de coupe (23) est inclinée dans un angle (F) compris entre 10 et 80° par rapport à un plan (E) s'étendant perpendiculairement à l'axe longitudinal (13) de la tige (12).
